# EUROPÄISCHE PATENTSCHRIFT

(11) **EP 3 230 139 B1**
(45) Veröffentlichungstag und Bekanntmachung des Hinweises auf die Patenterteilung: **12.05.2021**
(21) Anmeldenummer: 15816111.7
(22) Anmeldetag: 10.12.2015
(51) Int. Cl.: B60T 17/02

(54) **VERFAHREN UND VORRICHTUNG ZUR DRUCKLUFTVERSORGUNG EINES FAHRZEUGS**
METHOD AND DEVICE FOR SUPPLYING COMPRESSED AIR TO A VEHICLE
PROCÉDÉ ET DISPOSITIF D'ALIMENTATION D'UN VÉHICULE EN AIR COMPRIMÉ

(30) Priorität: 10.12.2014 DE 102014118265
(43) Veröffentlichungstag der Anmeldung: 18.10.2017
(73) Patentinhaber: KNORR-BREMSE Systeme für Nutzfahrzeuge GmbH, 80809 München (DE)
(72) Erfinder: KITZBERGER, Adam, 8400 Ajka (HU)
(86) Internationale Anmeldenummer: PCT/EP2015/079183
(87) Internationale Veröffentlichungsnummer: WO 2016/091986

(56) Entgegenhaltungen:
- EP-A1- 2 626 258
- DE-A1-102004 059 834
- DE-A1-102007 008 160
- DE-A1-102008 006 860

## Beschreibung

Die vorliegende Erfindung betrifft ein Verfahren zum Betrieb eines Druckluftsystems eines durch einen Benutzer gesteuerten Fahrzeugs, umfassend Verfahrensschritte, bei denen das Energieniveau in mindestens einem Druckluftreservoir erfasst wird, und durch eine elektronische Steuereinheit mit einem dem Druckluftreservoir zugeordneten oberen Schwellwert und / oder einem dem Druckluftreservoir zugeordneten unteren Schwellwert verglichen wird, und bei Unterschreiten des Energieniveaus unter den unteren Schwellwert ein Kompressor zur Drucklufterzeugung in dem mindestens einen Druckluftreservoir eingesetzt wird, und / oder bei Überschreiten des Energieniveaus über den oberen Schwellwert die Drucklufterzeugung in dem mindestens einen Druckluftreservoir gestoppt wird.

Ferner betrifft die Erfindung ein zur Durchführung des Verfahrens geeignetes Druckluftsystem.

Das Energieniveau und die damit verglichenen Schwellwerte bestehen dabei beispielsweise aus dem Luftdruck oder der Temperatur oder der Luftmasse innerhalb eines Druckluftreservoirs.

Das Einsatzgebiet der Erfindung erstreckt sich auf Fahrzeuge, die über Druckluftsysteme verfügen, mit denen verschiedene Druckluftverbraucher betrieben werden. Dabei handelt es sich beispielsweise um Betriebsbremssysteme, Feststellbremssysteme, Niveauregelungssysteme, oder Body-Builder-Systeme, wie beispielsweise pneumatisch angetriebene Hebebühnen. Dabei wird die jeweils benötigte Druckluft durch einen Kompressor zur Verfügung gestellt, der im Betrieb verschieden hohe Drücke erzeugen kann oder in einen Leerlauf geschaltet werden kann, beispielsweise um betriebsbedingten Verschleiß zu vermindern, Energie zu sparen, und durch hohen Luftdruck auftretende mechanische bzw. pneumatische Belastungen zu vermeiden.

Um die Kompressorleistung beispielsweise aus den genannten Gründen zu drosseln, sind im allgemeinen Stand der Technik verschiedene Verfahren bekannt, eine minimal notwendige Kompressorleistung abzuschätzen. Außerdem sind verschiedene Strategien zur Einsparung von Energie bekannt. Dazu gehört beispielsweise die bevorzugte Erzeugung von Druckluft während das Fahrzeug einem Gefälle folgend abwärts fährt. Dann kann das Fahrzeug energiesparend abgebremst werden, in dem der mechanisch an den Motor gekoppelte Kompressor zur Erzeugung von Druckluft eingesetzt wird.

Auch bekannt ist die Strategie, den Luftdruck in Luftdruckreservoirs zu erhöhen, wenn das Fahrzeug mit einer erhöhten Geschwindigkeit fährt, bei der mit häufigen Bremsvorgängen und daher mit erhöhtem Druckluftverbrauch zu rechnen ist.

Aus der DE 10 2011 100 512 A1 geht eine Steuereinrichtung für eine Luftbeschaffungsanlage eines Fahrzeugs hervor, wobei die Steuereinrichtung Zustandssignale über einen aktuellen Zustand eines Verbrennungsmotors oder einer Getriebeeinrichtung aufnimmt und in Abhängigkeit davon die Drucklufterzeugung durch den Kompressor ansteuert. Nachteilhaft hieran ist, dass viele insbesondere durch Einwirken eines Benutzers beeinflusste Szenarien, in denen erhöhter Druckluftverbrauch zu erwarten ist, nicht erkannt werden, und das durch die Erhöhung der eingespeisten Druckluft teilweise unnötige pneumatische Belastung von mechanischen Komponenten entsteht.

Aus der EP 2 628 258 A1 ist ferner ein Verfahren und eine Einrichtung bekannt mit den oberbegrifflichen Merkmalen des Anspruches 1.

Es ist die Aufgabe der vorliegenden Erfindung, ein Verfahren zu schaffen, durch das die Drucklufterzeugung an den im Betrieb auftretenden Druckluftverbrauch angepasst wird, und bei dem mechanische Komponenten möglichst geschont werden.

Die Aufgabe wird ausgehend von einem Verfahren gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder. Ein zur Ausführung des Verfahrens geeignetes Druckluftsystem wird in Anspruch 11 beschrieben.

Die Erfindung schließt die technische Lehre ein, dass durch ein mit der Steuereinheit und mit dem Benutzer kommunizierendes System ein Druckluftbedarf ermittelt wird, und ein, diesem Druckluftbedarf entsprechendes, Datenpaket an die Steuereinheit ausgesendet wird, und der untere und / oder der obere Schwellwert durch die Steuereinheit gemäß dem Datenpaket angepasst wird.

Der Vorteil dieses Verfahrens besteht unter anderem darin, dass ein externes System, auf das der Benutzer einwirken kann, einen voraussichtlichen Druckluftbedarf erkennen und an die Steuereinheit kommunizieren kann. Dadurch kann die Erzeugung von Druckluft effizient durchgeführt werden, da diese an den zukünftigen Verbrauch angepasst wird.

Durch das Verändern des oberen und / oder unteren Schwellwertes können Strategien definiert werden, welche die Zeitpunkte, zu denen der Kompressor zur Druckluftförderung gestartet und gestoppt wird, und auch die physikalische Kraft, gegen die der Kompressor minimal und maximal arbeiteten muss, beeinflussen. Diese Strategien können dabei konkret in den Datenpaketen definiert sein, oder durch die Steuereinheit anhand von in den Datenpaketen enthaltenen Informationen ermittelt werden.

Die Erfindung sieht vor, dass der obere und / oder der untere Schwellwert gemäß mindestens einem elektronisch Betriebsmodus des Druckluftsystems, umfassend Zuordnungen von Anfragen zu Schwellwerten, angepasst wird.

Der Vorteil besteht hier darin, dass verschiedene Betriebsmodi definiert werden können, beispielsweise ein energetisch sparsamer Betriebsmodus (ECO-Modus) oder ein Leistungs-Modus, bei dem hoher Druckluftverbrauch ermöglicht wird.

Eine Verbesserung der Erfindung sieht vor, dass verschiedenen Druckluftreservoirs verschiedene obere und / oder untere Schwellwerte zugeordnet werden.

Vorteilhaft ist diese Ausführungsform insbesondere zum einen, da der zu erwartende Druckluftverbrauch der verschiedenen Druckluftverbraucher unterschiedlich hoch sein kann, und zum anderen, da die Priorität, beispielsweise aufgrund sicherheitsrelevanter Aspekte, von einigen Druckluftverbrauchern, beispielsweise der Betriebsbremsen, höher sein kann als die von anderen Druckluftverbrauchern.

Die Erfindung sieht vor, dass durch das Datenpaket eine Anfrage zur Änderung des unteren und / oder des oberen Schwellwertes übermittelt wird.

Der Vorteil kann hier darin gesehen werden, dass ein System, welches das Datenpaket versendet, direkt die notwendige Strategie zur Druckluftversorgung auswählen oder definieren kann. Dazu müsste dieses System insbesondere über entsprechende Rechenanweisungen verfügen.

Eine andere bevorzugte Ausführungsform sieht vor, dass durch das Datenpaket eine Information übermittelt wird, anhand derer durch die Steuereinheit die Notwendigkeit einer Anpassung des unteren und oder des oberen Schwellwertes ermittelt wird.

Der Vorteil ist hier darin zu sehen, dass dieses Verfahren insbesondere auch in Druckluftsystemen durchführbar ist, bei denen die mit der Steuereinheit kommunizierenden Systeme nicht dazu ausgebildet sind bzw. über Rechenanweisungen verfügen, um auf die Druckluftversorgungsstrategie Einfluss zu nehmen. Gleichzeitig kann hierbei autonom durch die Steuereinheit unter Beachtung verschiedener Parameter der externen Systeme eine Anpassung der Schwellwerte bzw. der Druckluftversorgungsstrategie durchgeführt werden.

Eine besonders bevorzugte Ausführungsform der Erfindung sieht vor, dass das Datenpaket in Form einer Anfrage durch einen Benutzer über eine Mensch-Maschine-Schnittstelle ausgesendet wird.

Bei der Mensch-Maschine-Schnittstelle handelt es sich beispielsweise um einen berührungsempfindlichen Bildschirm oder mechanische Betätigungselemente wie Druckknöpfe auf dem Armaturenbrett des Fahrzeugs, oder um ein Mobiltelefon mit entsprechender Software und einer bestehenden Datenverbindung zu der Steuereinheit, beispielsweise unter anderem über kabelgebundene oder kabellose Kommunikationsmittel, wie beispielsweise Bluetooth oder ein drahtloses lokales Netzwerk (WLAN), oder ein Funknetzwerk beispielsweise auf dem GSM-Band.

Der Vorteil besteht hierbei unter anderem darin, dass vorzugsweise der Fahrer des Wagens selbst in der Lage ist, die Drucklufterzeugung zu beeinflussen, sollte der Fahrer beispielsweise eine entsprechende Notwendigkeit erkennen.

Eine bevorzugte Variante dieses Verfahrens sieht vor, dass durch den Benutzer eine einen Betriebsmodus enthaltende Anfrage ausgesendet wird.

Hierbei ist der Vorteil darin zu sehen, dass der Benutzer vorzugsweise aus einigen wenigen Betriebsmodi, wie beispielsweise einem energetisch sparsamen ECO-Modus oder einem Leistungs-Modus, wählen kann. Beispielsweise ist denkbar, dass der Fahrer durch anwählen des ECO-Modus eine vermindert leistungsfähige Luftfederung in Kauf nimmt, um Treibstoff einzusparen, der andernfalls zur Erzeugung zusätzlicher Druckluft verbraucht werden würde.

Alternativ dazu sieht eine bevorzugte Ausführungsform der Erfindung vor, dass durch den Benutzer eine einen oberen oder unteren Schwellwert enthaltene Anfrage ausgesendet wird.

Der Vorteil besteht hier dabei darin, dass insbesondere ein erfahrener Fahrer in der Lage ist, unmittelbar einen gewünschten oberen oder unteren Schwellwert, beispielsweise in einer physikalischen Einheit des Drucks wie bar oder Pascal, anzugeben, um gegebenenfalls sehr genau auf die Drucklufterzeugung Einfluss zu nehmen.

Eine andere Verbesserung der Erfindung sieht vor, dass durch das Datenpaket eine Information über die Aktivierung eines Systems, zugehörig einer Gruppe von Druckluftverbrauchern, der ein Niveauregelungssystem, ein Betriebsbremssystem, ein Parkbremssystem, ein Reifeninflationssystem und ein Body-Builder-System zugeordnet sind, übermittelt wird.

Der Vorteil ist hierbei darin zu sehen, dass die Steuereinheit durch Interpretation der verschiedenen den Druckluftverbrauch betreffenden Informationen in der Lage ist, beispielsweise den zukünftigen Druckluftverbrauch abzuschätzen, und die Schwellwerte entsprechend anzupassen.

Eine weitere Verbesserung des Verfahrens sieht vor, dass durch das Datenpaket eine Information über die Beschaffenheit der Straße, die verbleibende Strecke basierend auf einem in einem Navigationssystem definierten Streckenverlauf, die derzeitige Position und / oder die derzeitige Geschwindigkeit übermittelt wird.

Der Vorteil ist hierbei darin zu sehen, dass durch Kenntnis von Informationen, die einen erhöhten Druckluftverbrauch beispielsweise für ein Betriebsbremssystem erwarten lassen, eine geeignete Strategie zur Druckluftversorgung ausgewählt werden kann. Dabei handelt es sich beispielsweise um die Steigung der jeweiligen Straße, oder um Eigenschaften der Straße, die beispielsweise die Haftung der Räder darauf beeinflussen, wie Vereisung oder Streckenabschnitte aus beispielsweise Schotter oder Matsch, vor allem in Kombination mit der noch zu bewältigenden Strecke. Auch kann beispielsweise die Geschwindigkeitsinformation dazu genutzt werden, die Wahrscheinlichkeit von plötzlich auftretenden Bremsmanövern abzuschätzen. Die Beschaffenheit der Straße kann beispielsweise in einem entsprechenden Navigationssystem hinterlegt sein, beispielsweise über das Internet während der Fahrt abgerufen werden, oder auch sensorisch erfasst werden.

Eine bevorzugte Ausführungsform der zuvor genannten Verfahren sieht vor, dass der obere Schwellwert erhöht wird, wenn durch die Steuereinheit hoher Druckluftbedarf ermittelt wird, und verringert wird, wenn durch die Steuereinheit niedriger Druckluftbedarf ermittelt wird.

Das Ermitteln bezieht sich hierbei unter anderem auf die Auswertung von beispielsweise durch einen Benutzer direkt abgegebene Anfragen zur Veränderung des oberen Schwellwertes. Eine Erhöhung des oberen Schwellwertes bewirkt dabei vor allem, dass der Kompressor über längere Zeiten und insbesondere gegen höhere Drücke arbeitet beziehungsweise diese erzeugt. Eine Verringerung eines zuvor angehobenen oberen Schwellwertes bewirkt also indirekt eine Verringerung der Druckbeaufschlagung und dadurch verursachten Beschädigung von mechanischen Komponenten und einen verringerten Energieverbrauch.

Eine ebenfalls bevorzugte Ausführungsform des Verfahrens sieht vor, dass der untere Schwellwert erhöht wird, wenn durch die Steuereinheit hoher Druckluftbedarf ermittelt wird, und verringert wird, wenn durch die Steuereinheit niedriger Luftdruck ermittelt wird.

Der Vorteil ist hierbei insbesondere darin zu sehen, dass eine Erhöhung des unteren Schwellwertes, beispielsweise des Druckes, zwar mit einer früheren beziehungsweise häufigeren Aktivierung der Förderphase des Kompressors einhergeht, aber nicht mit einer wesentlichen Erhöhung der Druckbelastung von mechanischen Komponenten, da der maximal erzeugte Druck sich nicht verändert. Dieser wird durch Veränderung des oberen Schwellwerts beeinflusst.

Weitere die Erfindung verbessernde Maßnahmen werden nachstehend gemeinsam mit der Beschreibung eines bevorzugten Ausführungsbeispiels der Erfindung anhand der Figuren näher dargestellt.

Es zeigen:
- Figur 1: einen schematisierten Aufbau eines Druckluftsystems zur Durchführung des erfindungsgemäßen Verfahrens,
- Figur 2: Graphen zur Durchführung des Verfahrens mit verschiedenen Druckluftreservoirs, und
- Figur 3: Graphen zur Durchführung des Verfahrens mit minimaler Belastung mechanischer Komponenten.

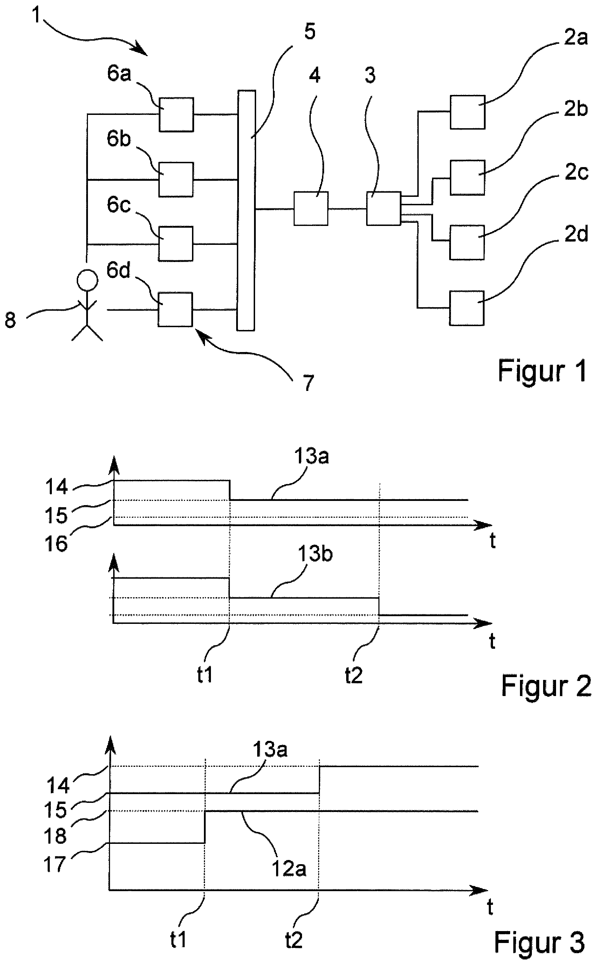

Gemäß Figur 1 umfasst ein Druckluftsystem 1 eines hier nicht dargestellten Fahrzeuges zwei Druckluftreservoirs 2a, 2b zweier Betriebsbremskreise, ein Druckluftreservoir 2c eines Feststellbremskreises und ein Druckluftreservoir 2d eines weiteren Verbrauchers. Die Druckluftreservoirs 2a, 2b, 2c, 2d werden dabei getrennt und unabhängig voneinander durch einen Kompressor 3 mit Druckluft versorgt. Zum Einleiten oder zum Beenden einer Förderphase des Kompressors 3 zur Erzeugung von Druckluft in einem der Druckluftreservoirs 2a, 2b, 2c, 2d wird der Kompressor 3 durch eine Steuereinheit 4 angesteuert. Die Steuereinheit 4 kommuniziert dabei über einen Datenbus 5 mit Systemen 6a, 6b, 6c, 6d. Das System 6d ist dabei als Mensch-Maschine-Schnittstelle 7 in Form eines berührungssensitiven Displays ausgebildet, welches durch einen Benutzer 8 direkt bedient wird.

Insbesondere kann der Benutzer 8 über die Mensch-Maschine-Schnittstelle 7 Anforderung zur Ansteuerung von einem ECO-Modus oder einem Leistungs-Modus abgeben. Der Benutzer 8 kommuniziert ebenfalls mit dem System 6a in Form eines Betriebsbremssystems, mit dem System 6b in Form eines Niveauregelungssystems und mit dem System 6c in Form eines Navigationssystems.

Das Betriebsbremssystem, das Niveauregelungssystem und das Navigationssystem übersenden dabei hier nicht dargestellte Datenpakete mit Information betreffend den bisherigen und voraussichtlichen Druckluftverbrauch über den Datenbus 5 an die Steuereinheit 4. Diese passt anschließend einen unteren Schwellwert 12 und einen oberen Schwellwert 13 an, die pro Druckluftreservoir 2a, 2b, 2c, 2d den Bereich definieren, innerhalb dessen der Kompressor 3 zur Drucklufterzeugung in dem jeweiligen Druckluftreservoir 2a, 2b, 2c, 2d eingesetzt wird.

Figur 2 zeigt den oberen Schwellwert 13a, der einem Druckluftreservoir 2a eines Betriebsbremskreises zugeordnet ist und den oberen Schwellwert 13b, der einem Druckluftreservoir 2d eines weiteren Verbrauchers zugeordnet ist.

Bis zu einem Zeitpunkt t1 befindet sich das Druckluftsystem 1 in einem Leistungs-Modus, bei dem allen Luftdruckreservoirs jeweils der obere Schwellwert 13a, 13b auf einem erhöhten Niveau 14 zugeordnet ist. Zu einem Zeitpunkt t1 wird durch einen Benutzer 8 über eine Mensch-Maschine-Schnittstelle 7 ein normaler Modus eingesteuert, in dem der obere Schwellwert 13a, 13b jeweils auf ein normales Niveau 15 abgesenkt wird. Dies bedeutet, dass in den beiden, diesen oberen Schwellwerten 13a, 13b zugeordneten Druckluftreservoirs 2a, 2d, der Luftdruck durch den Kompressor 3 bis zu einem geringeren Maximaldruck eingespeist wird als im Leistungs-Modus. Zu einem Zeitpunkt t2 wird durch den Benutzer 8 ein energiesparsamer ECO-Modus eingesteuert, beispielsweise um durch verringerte Druckluftproduktion Treibstoff einzusparen. Durch die Steuereinheit 4 wird der obere Schwellwert 13b, der dem Druckluftreservoir 2d zugeordnet ist, auf ein vermindertes Niveau 16 herabgesenkt, während der obere Schwellwert 13a, der einem sicherheitskritischen Druckluftreservoir 2a eines Betriebsbremskreises zugeordnet ist, unverändert auf dem normalen Niveau 15 gehalten wird.

Figur 3 zeigt einen Graphen, anhand dessen eine Strategie demonstriert wird, um die mechanische Belastung von verschiedenen Komponenten des Druckluftsystems 1 möglichst gering zu halten, auch wenn ein erhöhter Druckluftverbrauch ermöglicht werden muss. Dies wird erreicht durch gezielte Anpassung des oberen und unteren Schwellwertes 13a, 12a des Druckluftreservoirs 2a.

Bis zu einem Zeitpunkt t1 befindet sich das Druckluftsystem in einem normalen Modus. Zum Zeitpunkt t1 wird durch einen Benutzer 8 ein Leistungs-Modus eingesteuert. Dadurch wird durch die Steuereinheit 4 unverzüglich der untere Schwellwert 12a von einem normalen Niveau 17 auf ein erhöhtes Niveau 18 angehoben. Da allerdings der obere Schwellwert 13a vorerst nicht angehoben wird, kommt es nicht zu einer übermäßigen mechanischen Belastung beispielsweise des Kompressors oder zu anderen mechanischen Teilen des mit dem Druckluftreservoir 2a zusammenhängenden Druckluftkreises. Erst nach einem vordefinierten Zeitversatz wird zu einem Zeitpunkt t2 durch die Steuereinheit 4 auch der obere Schwellwert 13a von einem normalen Niveau 15 auf ein erhöhtes Niveau 14 angehoben. Falls beispielsweise der Benutzer 8 vor dem Zeitpunkt t2 von dem Leistungs-Modus wieder in einen normalen Modus wechselt, ist diese möglicherweise schädliche Erhöhung des oberen Schwellwertes 13a gegebenenfalls nicht mehr notwendig.

Die Erfindung ist nicht beschränkt auf die vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, dass der obere und / oder der untere Schwellwert verändert wird, um die Kompressorlaufzeit zu minimieren, um dem Ansammeln von Feuchtigkeit in Trocknungsmitteln entgegenzuwirken und möglichst viel Zeit für die Regeneration dieser Trocknungsmittel zur Verfügung zu stellen. Das Einleiten der Förderphase beziehungsweise die Aktivierung des Kompressors kann beispielsweise durch Ventile oder durch Herstellen und Lösen einer mechanischen Verbindung zum Antrieb des Kompressors geschehen.

### Bezugszeichenliste

- 1: Druckluftsystem
- 2a, 2b, 2c, 2d: Druckluftreservoir
- 3: Kompressor
- 4: Steuereinheit
- 5: Datenbus
- 6a, 6b, 6c, 6d: kommunizierendes System
- 7: Mensch-Maschine-Schnittstelle
- 12, 12a, 12b: unterer Schwellwert
- 13, 13a, 13b: oberer Schwellwert
- 14, 18: erhöhtes Niveau
- 15, 17: normales Niveau
- 16: vermindertes Niveau
- P: Druck
- t: Zeit
- t1, t2: Zeitpunkt

## Patentansprüche

1. Verfahren zum Betrieb eines Druckluftsystems (1) eines durch einen Benutzer (8) gesteuerten Fahrzeugs, umfassend Verfahrensschritte, bei denen das Energieniveau in mindestens einem Druckluftreservoir (2a; 2b; 2c; 2d) erfasst wird, und durch eine elektronische Steuereinheit (4) mit einem dem Druckluftreservoir (2a; 2b; 2c; 2d) zugeordneten oberen Schwellwert (13) und / oder einem dem Druckluftreservoir (2a; 2b; 2c; 2d) zugeordneten unteren Schwellwert (12) verglichen wird, und bei Unterschreiten des Energieniveaus unter den unteren Schwellwert (12) ein Kompressor (3) zur Drucklufterzeugung in dem mindestens einen Druckluftreservoir (2a; 2b; 2c; 2d) eingesetzt wird, und / oder bei Überschreiten des Energieniveaus über den oberen Schwellwert (13) die Drucklufterzeugung in dem mindestens einen Druckluftreservoir (2a; 2b; 2c; 2d) gestoppt wird, wobei durch ein mit der Steuereinheit (4) und mit dem Benutzer (8) kommunizierendes System (6a; 6b; 6c; 6d) ein Druckluftbedarf ermittelt wird, und ein, diesem Druckluftbedarf entsprechendes, Datenpaket an die Steuereinheit (4) ausgesendet wird, und der untere und / oder der obere Schwellwert (12; 13) durch die Steuereinheit (4) gemäß dem Datenpaket angepasst wird,
**dadurch gekennzeichnet, dass** der obere und / oder untere Schwellwert (12; 13) gemäß mindestens einem elektronisch hinterlegten Betriebsmodus des Druckluftsystems (1), umfassend Zuordnungen von Anfragen zu Schwellwerten (12; 13), angepasst wird, und dass durch das Datenpaket eine Anfrage zur Änderung des unteren und / oder des oberen Schwellwertes (12; 13) übermittelt wird.

2. Verfahren nach Anspruch 1,
**dadurch gekennzeichnet, dass** verschiedenen Druckluftreservoirs (2a; 2b; 2c; 2d) verschiedene obere und / oder untere Schwellwerte (12; 13) zugeordnet werden.

3. Verfahren nach Anspruch 1 oder 2,
**dadurch gekennzeichnet, dass** durch das Datenpaket eine Information übermittelt wird, anhand derer durch die Steuereinheit (4) die Notwendigkeit einer Anpassung des unteren und / oder des oberen Schwellwerts (12; 13) ermittelt wird.

4. Verfahren nach Anspruch 1,
**dadurch gekennzeichnet, dass** das Datenpaket durch einen Benutzer (8) über eine Mensch-Maschine-Schnittstelle (7) ausgesendet wird.

5. Verfahren nach Anspruch 4,
**dadurch gekennzeichnet, dass** durch den Benutzer (8) ein Datenpaket mit einer einen Betriebsmodus enthaltenden Anfrage ausgesendet wird.

6. Verfahren nach Anspruch 4,
**dadurch gekennzeichnet, dass** durch den Benutzer (8) ein Datenpaket mit einer einen Schwellwert (12; 13) enthaltenden Anfrage ausgesendet wird.

7. Verfahren nach Anspruch 3,
**dadurch gekennzeichnet, dass** durch das Datenpaket eine Information über die Aktivierung eines Systems (6a; 6b; 6c; 6d), zugehörig einer Gruppe von Druckluftverbrauchern, der ein Niveauregelungssystem, ein Betriebsbremssystem, ein Parkbremssystem, ein Reifeninflationssystem und ein Body-Builder-System zugeordnet sind, übermittelt wird.

8. Verfahren nach Anspruch 3,
**dadurch gekennzeichnet, dass** durch das Datenpaket eine Information über die Beschaffenheit der Straße, die verbleibende Strecke basierend auf einem in einem Navigationssystem definierten Streckenverlauf, die derzeitige Position und / oder die derzeitige Geschwindigkeit übermittelt wird.

9. Verfahren nach einem der vorherigen Ansprüche,
**dadurch gekennzeichnet, dass** der obere Schwellwert (13) erhöht wird, wenn durch die Steuereinheit (4) hoher Druckluftbedarf ermittelt wird, und verringert wird, wenn durch die Steuereinheit (4) niedriger Druckluftbedarf ermittelt wird.

10. Verfahren nach einem der vorherigen Ansprüche,
**dadurch gekennzeichnet, dass** der untere Schwellwert (12) erhöht wird, wenn durch die Steuereinheit (4) hoher Druckluftbedarf ermittelt wird, und verringert wird, wenn durch die Steuereinheit (4) niedriger Luftdruck ermittelt wird.

11. Druckluftsystem (1) eines Fahrzeugs zur Durchführung eines Verfahrens nach einem der Ansprüche 1 bis 10, aufweisend mindestens ein Druckluftreservoir (2a; 2b; 2c; 2d), ein Kompressor (3), eine elektronische Steuereinheit (4) und ein mit der Steuereinheit (4) und mit dem Benutzer (8) des Fahrzeugs kommunizierende System (6a; 6b; 6c; 6d), die geeignet sind, die Schritte des Verfahrens nach einem der Ansprüche 1 bis 10 auszuführen.

12. Druckluftsystem nach Anspruch 11, **dadurch gekennzeichnet, dass** eine Mensch-Maschine-Schnittstelle (7) in Form einer berührungssensitiven Anzeige vorgesehen ist, zur Aussendung eines Datenpaketes durch einen Benutzer (8).

## Claims

1. Method for operating a compressed-air system (1) of a vehicle controlled by a user (8), comprising process steps in which the energy level in at least one compressed-air reservoir (2a; 2b; 2c; 2d) is detected and compared by an electronic control unit (4) with an upper threshold value (13) associated with the compressed-air reservoir (2a; 2b; 2c; 2d) and/or a lower threshold value (12) associated with the compressed-air reservoir (2a; 2b; 2c; 2d), and if the energy level is lower than the lower threshold value (12) a compressor (3) is used to deliver compressed air into the at least one compressed-air reservoir (2a; 2b; 2c; 2d), and/or if the energy level is above the upper threshold value (13) the delivery of compressed air to the at least one compressed-air reservoir (2a; 2b; 2c; 2d) is stopped, wherein by means of a system (6a; 6b; 6c; 6d) that communicates with the control unit (4) and with a user (8) a compressed-air requirement is determined and a data packet that corresponds to the said compressed-air requirement is sent to the control unit (4), and the lower and/or the upper threshold value (12; 13) is/are adapted by the control unit (4) in accordance with the said data packet,
**characterised in that** the upper and/or the lower threshold value (12; 13) is/are adapted in accordance with at least one electronically stored operating mode of the compressed-air system (1), which comprises associations between requirements and threshold values (12; 13), and a request to change the lower and/or the upper threshold value (12; 13) is passed on by the data packet.

2. Method according to Claim 1,
**characterised in that** different upper and/or lower threshold values (12; 13) are associated with different compressed-air reservoirs (2a; 2b; 2c; 2d).

3. Method according to Claims 1 or 2,
**characterised in that** by way of the data packet information is transmitted, with reference to which the need to adapt the lower and/or the upper threshold value (12; 13) is determined by the control unit (4).

4. Method according to Claim 1,
**characterised in that** the data packet is sent by a user (8) via a man-machine interface (7).

5. Method according to Claim 4,
**characterised in that** the user (8) sends out a data packet with a request that includes an operating mode.

6. Method according to Claim 4,
**characterised in that** the user (8) sends out a data packet with a request that includes a threshold value (12; 13).

7. Method according to Claim 3,
**characterised in that** the data packet transmits information about the activation of a system (6a; 6b; 6c; 6d) that belongs to a group of compressed-air consumers with which a level adjustment system, a service brake system, a parking brake system, a tyre inflation system and a body-builder system are associated.

8. Method according to Claim 3,
**characterised in that** the data packet transmits information about the condition of the road, the distance remaining based on a route defined by a navigation system, the current position and/or the current speed.

9. Method according to any of the preceding claims,
**characterised in that** the upper threshold value (13) is increased if the control unit (4) determines a higher requirement for compressed -air and is reduced if the control unit (4) determines a lower requirement for compressed air.

10. Method according to any of the preceding claims,
**characterised in that** the lower threshold value (12) is reduced if the control unit (4) determines a higher requirement for compressed air and is reduced if the control unit (4) determines a lower air pressure.

11. Compressed-air system (1) of a vehicle
for carrying out a method according to any of Claims 1 to 10, comprising at least one compressed-air reservoir (2a; 2b; 2c; 2d), a compressor (3), an electronic control unit (4) and a system (6a; 6b; 6c; 6d) that communicates with the control unit (4) and with the user (8) of the vehicle, which system is suitable for carrying out the steps of the method according to any of Claims 1 to 10.

12. Compressed-air system according to Claim 11,
**characterised in that** the man-machine interface (7) is provided in the form of a touch-sensitive display for the transmission of a data packet by a user (8).

## Revendications

1. Procédé pour faire fonctionner un système (1) à air comprimé d'un véhicule commandé par un utilisateur (8), comprenant des stades de procédé, dans lesquels on relève le niveau d'énergie dans au moins un réservoir (2a ; 2b ; 2c ; 2d) à air comprimé et, par une unité (4) électronique de commande, on le compare à une valeur (13) de seuil supérieur, associée au réservoir (2a ; 2b ; 2c ; 2d) à air comprimé et/ou à une valeur (12) de seuil inférieur, associée au réservoir (2a ; 2b ; 2c ; 2d) à air comprimé et, lorsque le niveau d'énergie passe en-dessous de la valeur (12) de seuil inférieur, on utilise un compresseur (3) de production d'air comprimé dans le au moins un réservoir (2a ; 2b ; 2c ; 2d) à air comprimé et/ou, lorsque le niveau d'énergie passe au-dessus de la valeur (13) de seuil supérieur, on arrête la production d'air comprimé dans le au moins un réservoir (2a ; 2b ; 2c ; 2d) à air comprimé, dans lequel, par un système (6a ; 6b ; 6c ; 6d) communiquant avec l'unité (4) de commande et avec l'utilisateur(8), on détermine un besoin d'air comprimé et on envoie à l'unité (4) de commande un paquet de données correspondant à ce besoin d'air comprimé et on adapte, conformément au paquet de données, la valeur (12 ; 13) de seuil inférieur et/ou supérieur par l'unité (4) de commande,
**caractérisé en ce que** l'on adapte la valeur (12 ; 13) de seuil supérieur et/ou inférieur suivant un mode de fonctionnement, mis en mémoire électroniquement, du système (1) à air comprimé, comprenant des affectations de demandes à des valeurs (12 ; 13) de seuil et **en ce que** l'on transmet par le paquet de données une demande de modification de la valeur (12 ; 13) de seuil inférieur et/ou supérieur.

2. Procédé suivant la revendication 1, **caractérisé en ce que** l'on affecte des valeurs (12 ;13) de seuil supérieur et/ou inférieur différentes à des réservoirs (2a ; 2b ; 2c ; 2d) à air comprimé différents.

3. Procédé suivant la revendication 1 ou 2,
**caractérisé en ce que** l'on transmet par le paquet de données une information, au moyen de laquelle on détermine, par l'unité (4) de commande, la nécessité d'une adaptation de la valeur (12 ;13) de seuil inférieur et/ou supérieur.

4. Procédé suivant la revendication 1,
**caractérisé en ce que** l'on envoie le paquet de données par un utilisateur (8) par l'intermédiaire d'une interface (7) homme-machine .

5. Procédé suivant la revendication 4,
**caractérisé en ce que** l'on envoie par l'utilisateur (8) un paquet de données ayant une demande contenant un mode de fonctionnement.

6. Procédé suivant la revendication 4,
**caractérisé en ce que** l'on envoie par l'utilisateur (8) un paquet de données ayant une demande contenant une valeur (12 ; 13) de seuil.

7. Procédé suivant la revendication 3,
**caractérisé en ce que** l'on transmet par le paquet de données l'information sur l'activation d'un système (6a ; 6b ; 6c ; 6d), associé à un groupe de consommateurs d'air comprimé auquel sont associés un système de réglage de niveau, un système de frein de service, un système de frein de stationnement, un système de gonflage de pneumatique et un système de constructeur de carrosserie.

8. Procédé suivant la revendication 3,
**caractérisé en ce que** l'on transmet par le paquet de données une information sur l'état de la route, le trajet restant à parcourir sur la base d'un itinéraire défini dans un système de navigation, la position instantanée et/ou la vitesse instantanée.

9. Procédé suivant l'une des revendications précédentes,
**caractérisé en ce que** l'on élève la valeur (13) de seuil supérieur, s'il est déterminé par une unité (4) de commande un plus grand besoin d'air comprimé et on l'abaisse s'il est déterminé par l'unité (4) de commande un besoin moindre d'air comprimé.

10. Procédé suivant l'une des revendications précédentes,
**caractérisé en ce que** l'on élève la valeur (12) de seuil inférieur s'il est déterminé par l'unité (4) de commande un plus grand besoin d'air comprimé et on l'abaisse s'il est déterminé par l'unité (4) de commande une pression d'air plus basse.

11. Système (1) à air comprimé d'un véhicule ,
pour effectuer un procédé suivant l'une des revendications 1 à 10, comportant au moins un réservoir (2a ; 2b ; 2c ; 2d) à air comprimé, un compresseur (3), une unité (4) électronique de commande et un système (6a ; 6b ; 6c ; 6d) communiquant avec l'unité (4) de commande et avec l'utilisateur (8) du véhicule, qui sont propres à exécuter les stades du procédé suivant l'une des revendications 1 à 10.

12. Système à air comprimé suivant la revendication 11,
**caractérisé en ce qu'**il est prévu une interface (7) homme-machine, sous la forme d'un affichage tactile, pour l'envoi d'un paquet de données par un utilisateur (8).
